# EUROPEAN PATENT APPLICATION

(11) **EP 3 882 111 A1**
(43) Date of publication of application: **22.09.2021**
(21) Application number: 21160805.4
(22) Date of filing: 04.03.2021
(51) Int. Cl.: B62H 1/06

(54) **BICYCLE KICKSTAND WITH DEVICE FOR ADJUSTING THE LENGTH OF ITS LEG**

(30) Priority: 19.03.2020 IT 202000005836
(71) Applicant: Ursus S.P.A., 36027 Rosa' VI (IT)
(72) Inventor: FERRONATO, Sergio, 36027 ROSA' VI (IT)
(74) Representative: Modiano, Micaela Nadia

(57) **Abstract**

A bicycle kickstand (10), comprising a fixing bracket (11) and a leg (12) articulated thereto, the leg (12) comprising in turn:
- a rod-like body (13),
- a foot (14) which can translate with respect to the rod-like body (13),
- means (15) for mutual fixing between the rod-like body (13) and the foot (14), which are coupled to the foot (14).

The means (15) for mutual fixing between the rod-like body (13) and the foot (14) are constituted by at least one element made of elastic material.

## Description

The present invention relates to a bicycle kickstand with a device for adjusting the length of its leg.

The bicycle kickstand is a component of a bicycle that enables the bicycle to be kept in a substantially vertical configuration, similar to the configuration for use, while parked.

Among the kickstands on the market, substantially two types of bicycle kickstand can be distinguished.

The first type of bicycle kickstand is the "central" bicycle kickstand, which is fixed in a central portion of the frame of the bicycle, comprised substantially between the two wheels.

Such central bicycle kickstand has at least one leg (but there may be two), which comprises a substantially rod-like element which is articulated, at one end, to a bracket for fixing to the frame of the bicycle.

This leg in the configuration for use, which corresponds to the parked configuration of the bicycle, has a substantially vertical extension and allows the bicycle to be rested on the ground, keeping it in a configuration substantially similar to the configuration of the bicycle when it is in use.

The second type of bicycle kickstand is the "rear" bicycle kickstand, which is fixed on a rear portion of the frame of the bicycle, substantially in a region adjacent to the rear wheel.

In the present description, the expression "rear portion" designates the portion of the bicycle that is at the rear with respect to the direction of advancement thereof.

The rear bicycle kickstand also has a leg constituted by a substantially rod-like element which is articulated, at one end, to a bracket for fixing to the frame of the bicycle.

Operation of a rear bicycle kickstand is similar to that of a central bicycle kickstand.

Usually , the leg of a bicycle kickstand comprises:
- a rod-like body, usually made of metal,
- a foot, at the end opposite to the end articulated to the fixing bracket, generally made of plastic material, with a widened base for resting on the ground in order to improve parking stability, while discharging the weight of the bicycle on the ground.

This foot can be:
- fixed,
- translatable with respect to the rod-like body, in order to vary/adjust the length of the leg of the bicycle kickstand, according to requirements.

In a bicycle kickstand with an adjustable leg length, normally the foot is constituted by a tubular element, inside which the rod-like body can slide and which is closed at one end by a widened supporting base.

To adjust the length and mutually fix the foot and the rod-like body, the rod-like body is provided with a portion with a line of extension parallel to that of the leg, with a rack or with a plurality of holes arranged along the same line of extension.

One or more retractable teeth/pins/screws extend from the tubular body of the foot and, by interacting and by being inserted:
- between two successive teeth of the rack,
- or into one of the holes described above,
lock the mutual sliding and translation between the foot and the rod-like body.

Such conventional techniques have a number of drawbacks.

In some cases the tooth/pin is associated with the tubular body of the foot, and its retraction is controlled by a button provided with an adapted spring that interacts with the corresponding tooth/pin.

This determines the necessity of a considerable number of components to make the bicycle kickstand.

Furthermore, assembly of the bicycle kickstand is lengthy, complex and inconvenient, as it consists of putting together components of dimensions measuring, in some cases, millimeters.

In other cases, the pin/screw is a component separate from the tubular body of the foot which is applied, with the aid of a tool, after having obtained the desired length.

In this case too, assembly of the bicycle kickstand is lengthy, inconvenient and complex, as it consists of putting together components of dimensions measuring, in some cases, millimeters.

Also, in this case, adjustment by the user is long, inconvenient and complex, with the user having to:
- remove the pin/screw,
- adjust the length of the leg, by sliding the rod-like body telescopically with respect to the tubular body of the foot,
- then reinsert the screw/pin after having obtained the desired length.

The aim of the present invention is to provide a bicycle kickstand with a device for adjusting the length of its leg that is capable of improving the known art in one or more of the abovementioned aspects.

Within this aim, an object of the invention is to provide a bicycle kickstand with a device for adjusting the length of its leg that has a lower number of components than similar conventional bicycle kickstands.

Another object of the invention is to provide a bicycle kickstand with a device for adjusting the length of its leg that allows an assembly that is faster, simpler and easier assembly than similar conventional bicycle kickstands.

A further object of the invention is to provide a bicycle kickstand with a device for adjusting the length of its leg that allows a rapid and simple adjustment of such length.

A still further object of the present invention is to overcome the drawbacks of the background art in a manner that is alternative to any existing solutions.

Another object of the invention is to provide a bicycle kickstand with a device for adjusting the length of its leg that is highly reliable, easy to implement and low-cost.

This aim and these and other objects which will become more apparent hereinafter are achieved by a bicycle kickstand, comprising a fixing bracket and a leg articulated thereto, the leg comprising in turn:
- a rod-like body,
- a foot which can translate with respect to said rod-like body,
- means for mutual fixing between said rod-like body and said foot, which are coupled to said foot,
characterized in that said means for mutual fixing between said rod-like body and said foot are constituted by at least one element made of elastic material.

Further characteristics and advantages of the invention will become more apparent from the detailed description that follows of a preferred, but not exclusive, embodiment of the bicycle kickstand with a device for adjusting the length of its leg, according to the invention, which is illustrated for the purposes of non-limiting example in the accompanying drawings wherein:

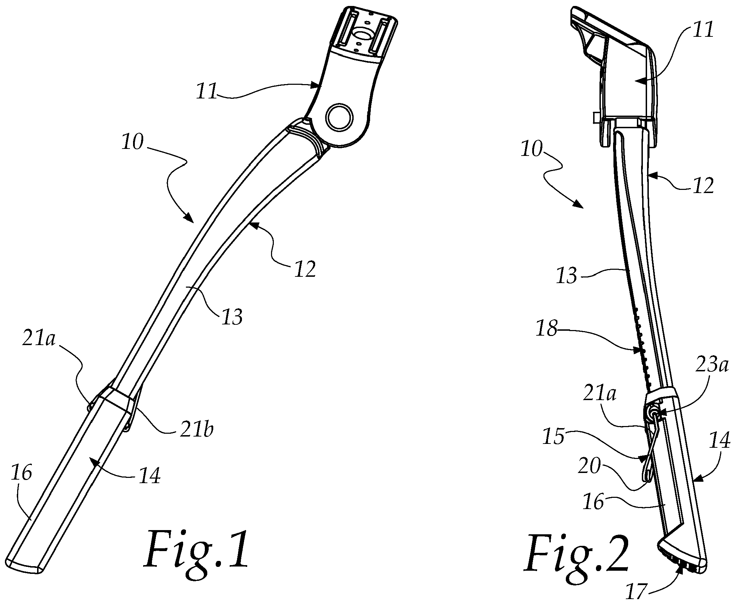

- Figures 1 and 2 are two general perspective views of a bicycle kickstand with a device for adjusting the length of its leg, according to the invention;
- Figures 3a and 3b are two different views of a component of the bicycle kickstand of Figures 1 and 2;
- Figure 4 is an enlarged detail of the component of Figures 3a and 3b;
- Figure 5 shows the bicycle kickstand of Figures 1 and 2 in a first configuration of adjustment;
- Figure 6 is a cross-sectional detail view of the bicycle kickstand according to the invention, taken along the line VI-VI of Figure 5;
- Figure 7 is a cross-sectional view of the bicycle kickstand according to the invention, taken along the line VII-VII of Figure 5;
- Figure 8 shows the bicycle kickstand of Figures 1 and 2 in a second configuration of adjustment;
- Figure 9 is a cross-sectional detail view of the bicycle kickstand according to the invention, taken along the line IX-IX of Figure 8;
- Figure 10 is a cross-sectional view of the bicycle kickstand according to the invention, taken along the line X-X of Figure 8.

With reference to the figures, a bicycle kickstand with a device for adjusting the length of its leg, according to the invention, is generally designated by the reference numeral 10.

The bicycle kickstand 10 comprises a fixing bracket 11 and a leg 12 articulated thereto.

Such leg 12 comprises, in turn:
- a rod-like body 13,
- a foot 14 which can translate with respect to the rod-like body 13,
- means 15 for mutual fixing between the rod-like body 13 and the foot 14, which are coupled to the latter.

One of the particularities of the invention consists in that the means 15 for mutual fixing between the rod-like body 13 and the foot 14 are constituted by at least one element made of elastic material.

Preferably, the means 15 for mutual fixing between the rod-like body 13 and the foot 14 are constituted by a single element made of elastic material.

In particular, the foot 14 is arranged at the end of the leg 12 that is opposite to the end that is articulated to the fixing bracket 11.

The foot 14 comprises a substantially tubular body 16 which is closed at one end by a base 17 for resting on the ground, which is substantially inclined by an acute angle with respect to the direction of extension of the leg 12.

The rod-like body 13 has substantially the same axis of extension as the tubular body 16 of the foot 14.

Such rod-like body 13 is slideable, at least partially, within the tubular body 16 of the foot 14.

The rod-like body 13 has a rack-like portion 18 in the part that slides within the tubular body 16 of the foot 14.

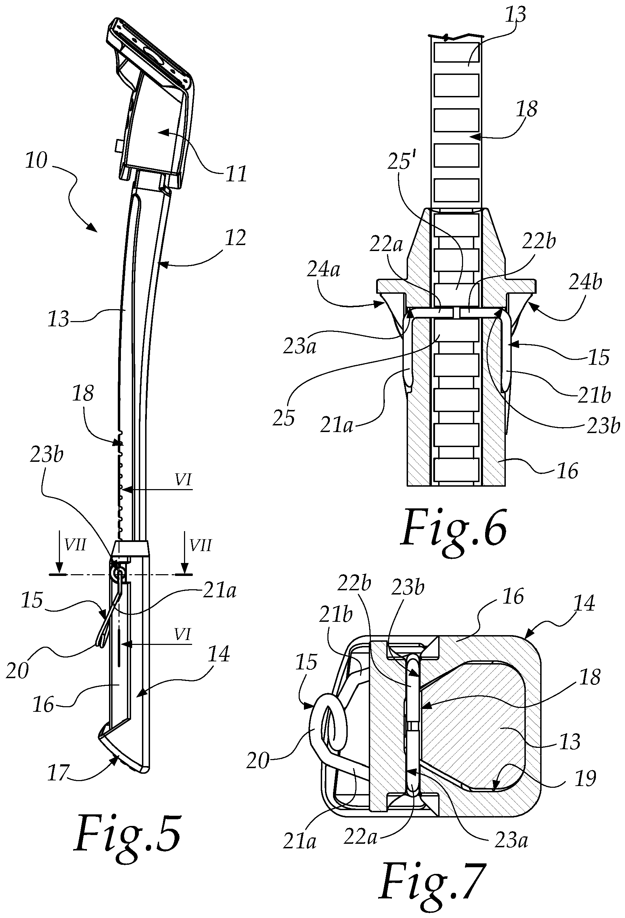

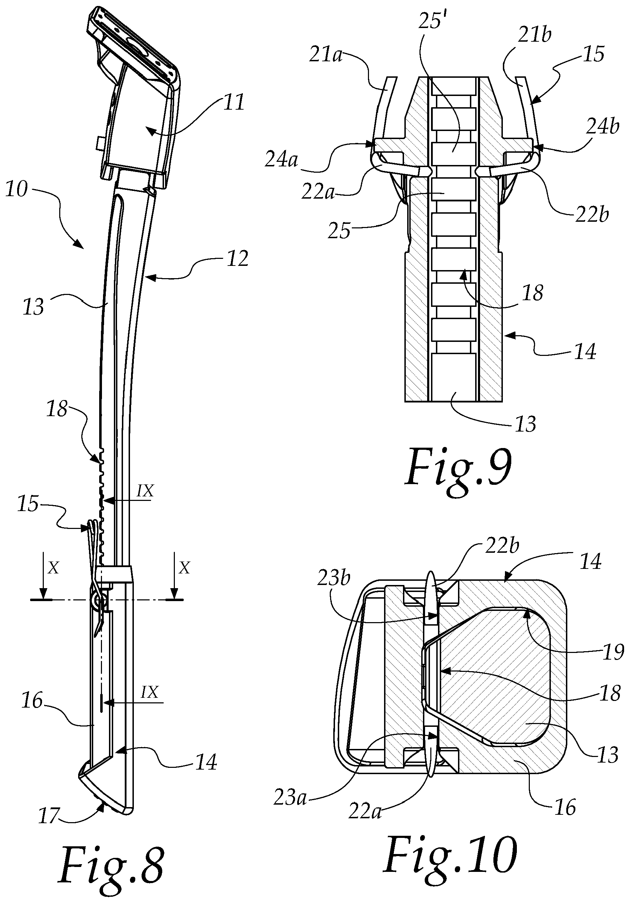

Specifically, considering Figures 7 and 10, the rod-like body 13 has a cross-section, on a plane perpendicular to its axis of extension, with a narrower region on the side with the rack-like portion 18.

Again considering Figures 7 and 10, the tubular body 16 has an internal profile 19 that duplicates the profile of the rod-like body 13.

The means 15 for fixing are constituted by a single metallic element, which is partly reminiscent of a safety pin and which has at least one turn 20 from which two parallel arms 21a and 21b extend in the same direction:
- a first arm 21a,
- a second arm 21b.

Each one of the two arms 21a and 21b has an end 22a, 22b that is inclined substantially at 90° with respect to its direction of extension and is inserted in a corresponding hole 23a, 23b of the tubular body 16 of the foot 14, respectively a first hole 23a and a second hole 23b.

The end 22a of the first arm 21a and the end 22b of the second arm 22b are coaxial.

The first hole 23a and the second hole 23b have an axis of extension that is:
- substantially coplanar with the side of the rod-like body 13 that is provided with the rack-like portion 18,
- perpendicular to the sagittal plane of symmetry of the rack-like portion 18 of the rod-like body 13.

The expression "sagittal plane of symmetry", in the present description, designates a plane that runs in the fore-and-aft direction dividing a body into two parts, right and left.

The two arms 21a and 21b and the respective ends 22a, 22b are mirror-symmetrical with respect to the sagittal plane of symmetry of the means 15 for fixing.

The first hole 23a and the second hole 23b of the tubular body 16 of the foot 14 are coaxial and through.

Proximately to/at each hole 23a, 23b, the tubular body 16 of the foot 14 has a raised portion 24a, 24b, which is shaped so as to define two different configurations of the respective end 22a, 22b:
- a locked configuration, illustrated in Figures 5 to 7, in which the ends 22a, 22b, are inserted between two successive teeth 25, 25', of the rack-like portion 18 of the rod-like body 13, and the translation of the rod-like body 13 with respect to the tubular body 16 of the foot 14 is prevented;
- a released configuration, illustrated in Figures 8 to 10, in which the ends 22a, 22b, are not inserted between two successive teeth 25, 25' of the rack-like portion 18 of the rod-like body 13, and the latter can slide within the tubular body 16 of the foot 14.

Each raised portion 24a, 24b has a substantially C-shaped and/or ear-shaped profile, which surrounds the corresponding hole 23a, 23b.

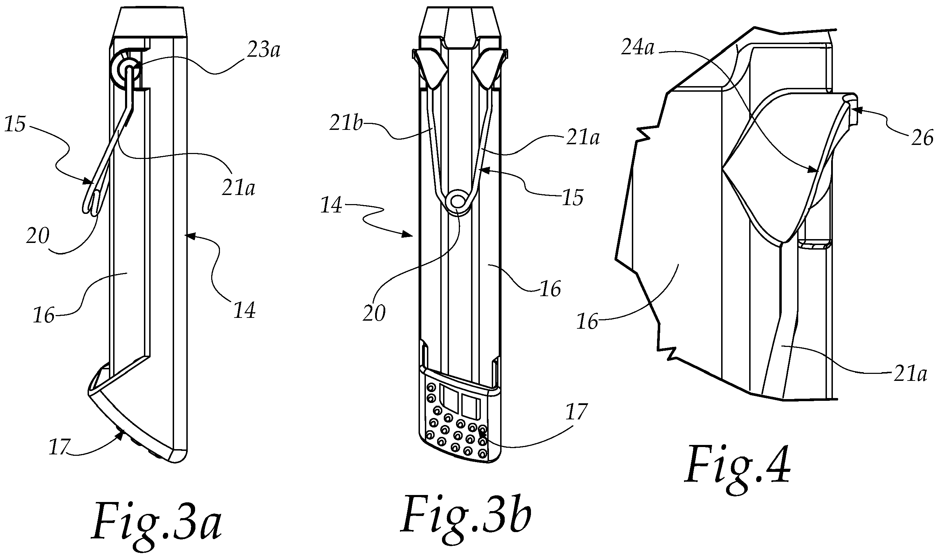

The raised portion 24a, 24b has a recess 26, shown in Figure 4 for the raised portion 24a, but similar for the raised portion 24b, which is shaped complementarily to the respective arm 21a, 21b, and is adapted to retain it stably in the released configuration, in order to facilitate the sliding of the rod-like body 13 within the tubular body 16, if needed, and prevent the means 15 for fixing from accidentally returning to the locked configuration.

The expression "retain it stably", in the present description, means that it is necessary to use force to remove the arm 21a, 21b from the recess 26.

In a variation of embodiment, not shown in the figures, the rod-like body 13 has, instead of the rack-like portion 18, a portion with a plurality of holes, arranged along a same line.

In such variation of embodiment, operation is similar to that described above, with the ends 22a, 22b being inserted into the holes instead of between two successive teeth.

It should be noted that the turn 20 operates like an elastic return, always tending to bring the two ends 22a, 22b toward each other and in this manner preventing the means 15 for fixing from accidentally sliding out of the foot 14.

In variations of embodiment, not shown in the figures, the turn 20 is not present and the elastic return, which tends to bring the two ends 22a, 22b together, is ensured by the elasticity of the material of the element that constitutes the means 15 for fixing.

Operation of the bicycle kickstand 10 according to the invention is the following.

To allow the translation of the rod-like body 13 it is necessary to pass from the locked configuration, shown in Figures 5 to 7, to the released configuration, shown in Figures 8 to 10.

To do this, the user lifts the means 15 for fixing, making them rotate about the axis that passes through the two ends 22a and 22b.

At the same time, by virtue of the interaction between the arms 21a and 21b of the means 15 for fixing and the corresponding raised portions 24a and 24b of the tubular body 16, such means 15 for fixing are widened, moving the arms 21a and 21b apart, and simultaneously also the ends 22a and 22b, up until the released configuration of Figures 8-10 is reached.

In this configuration the rod-like body 13 can slide within the tubular body 16 of the foot 14.

The user makes the rod-like body 13 slide within the tubular body 16 up to the desired height of the leg 12.

At this point the means 15 are returned from the released configuration of Figures 8-10 to the locked configuration of Figures 5-7.

The user lowers the means 15 for fixing, making them rotate about the axis that passes through the two ends 22a and 22b.

At the same time, by virtue of the interaction between the arms 21a and 21b of the means 15 for fixing and the corresponding raised portions 24a and 24b of the tubular body 16, such means 15 for fixing are narrowed, moving the arms 21a and 21b together, and simultaneously also the ends 22a and 22b, up until the locked configuration of Figures 5-7 is reached.

In this configuration the rod-like body 13 is locked within the tubular body 16 of the foot 14.

In practice it has been found that the invention fully achieves the intended aim and objects by providing a bicycle kickstand with a device for adjusting the length of its leg that has a lower number of components than similar conventional bicycle kickstands.

With the invention a bicycle kickstand with a device for adjusting the length of its leg is provided that allows an assembly that is faster, simpler and easier than with similar conventional bicycle kickstands, it being necessary to insert a single and solitary element, corresponding to the means 15 for fixing, into the tubular body 16 of the foot 14.

Furthermore, with the invention a bicycle kickstand with a device for adjusting the length of its leg is provided that allows a rapid and simple adjustment of the length of the leg.

The invention thus conceived is susceptible of numerous modifications and variations, all of which are within the scope of the appended claims. Moreover, all the details may be substituted by other, technically equivalent elements.

In practice the materials employed, provided they are compatible with the specific use, and the contingent dimensions and shapes, may be any according to requirements and to the state of the art.

The disclosures in Italian Patent Application No. 102020000005836 from which this application claims priority are incorporated herein by reference.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. A bicycle kickstand (10), comprising a fixing bracket (11) and a leg (12) articulated thereto, said leg (12) comprising in turn:
- a rod-like body (13),
- a foot (14) which can translate with respect to said rod-like body (13),
- means (15) for mutual fixing between said rod-like body (13) and said foot (14), which are coupled to said foot (14),
**characterized in that** said means (15) for mutual fixing between said rod-like body (13) and said foot (14) are constituted by at least one element made of elastic material.

2. The bicycle kickstand (10) according to claim 1, **characterized in that** said foot (14) comprises a substantially tubular body (16) which is closed at one end by a base (17) for resting on the ground, which is substantially inclined with respect to the direction of extension of said leg (12).

3. The bicycle kickstand (10) according to claim 2, **characterized in that** said rod-like body (13) substantially has the same axis of extension as said tubular body (16) of said foot (14), said rod-like body (13) being able to slide, at least partially, within said tubular body (16) of said foot (14).

4. The bicycle kickstand (10) according to one or more of the preceding claims, **characterized in that** said rod-like body (13) has a rack-like portion (18) in the part that slides within said tubular body (16) of said foot (14).

5. The bicycle kickstand (10) according to one or more of the preceding claims, **characterized in that** said rod-like body (13) has a cross-section, on a plane perpendicular to its axis of extension, with a narrower region on the side with said rack-like portion (18), said tubular body (16) having an internal profile (19) that duplicates the profile of said rod-like body (13).

6. The bicycle kickstand (10) according to one or more of the preceding claims, **characterized in that** said means (15) for fixing are constituted by a single metallic element, which has at least one turn (20) from which two parallel arms (21a, 21b) extend in the same direction:
- a first arm (21a),
- a second arm (21b),
each one of said two arms (21a, 21b) having an end (22a, 22b) that is inclined substantially at 90° with respect to its direction of extension and is inserted in a corresponding hole (23a, 23b) of said tubular body (16) of said foot (14), respectively a first hole (23a) and a second hole (23b).

7. The bicycle kickstand (10) according to one or more of the preceding claims, **characterized in that** said first hole (23a) and said second hole (23b) have an axis of extension that is:
- substantially coplanar with the side of said rod-like body (13) that is provided with said rack-like portion (18),
- perpendicular to the sagittal plane of symmetry of said rack-like portion (18) of said rod-like body (13).

8. The bicycle kickstand (10) according to one or more of the preceding claims, **characterized in that** said first hole (23a) and said second hole (23b) of said tubular body (16) of said foot (14) are coaxial and through.

9. The bicycle kickstand (10) according to one or more of the preceding claims, **characterized in that**:
- the end (22a) of said first arm (21a) and the end (22b) of said second arm (21b) are coaxial,
- said two arms (21a, 21b) and the respective ends (22a, 22b) are mirror-symmetrical with respect to the sagittal plane of symmetry of said means (15) for fixing.

10. The bicycle kickstand (10) according to one or more of the preceding claims, **characterized in that** proximately to/at said first hole (23a) and said second hole (23b) said tubular body (16) of said foot (14) has a raised portion (24a, 24b) that is shaped so as to define two different configurations of said end (22a, 22b) of said two arms (21a, 21b):
- a locked configuration, in which said end (22a) of said first arm (21a) and said end (22b) of said second arm (21b) are inserted between two successive teeth (25, 25') of said rack-like portion (18) of said rod-like body (13), and the translation of said rod-like body (13) with respect to said tubular body (16) of said foot (14) is prevented,
- a released configuration, in which said end (22a) of said first arm (21a) and said end (22b) of said second arm (21b) are not inserted between two successive teeth (25, 25') of said rack-like portion (18) of said rod-like body (13) and the latter can slide within said tubular body (16) of said foot (14).

11. The bicycle kickstand (10) according to one or more of the preceding claims, **characterized in that** said raised portion (24a, 24b) has a substantially C-shaped and/or ear-shaped profile, which surrounds said corresponding hole (23a, 23b).

12. The bicycle kickstand (10) according to one or more of the preceding claims, **characterized in that** said raised portion (24a, 24b) has a recess (26) which is shaped complementarily to one of said arms (21a, 21b) and is adapted to retain it stably in the released configuration.
